# EUROPÄISCHE PATENTSCHRIFT

(11) **EP 4 061 517 B1**
(45) Veröffentlichungstag und Bekanntmachung des Hinweises auf die Patenterteilung: **26.03.2025**
(21) Anmeldenummer: 20799677.8
(22) Anmeldetag: 28.10.2020
(51) Int. Cl.: B01D 65/08, B01D 63/02, B01D 63/06, B01D 65/02

(54) **FILTERVORRICHTUNG**
FILTER APPARATUS
APPAREIL DE FILTRATION

(30) Priorität: 21.11.2019 AT 510062019
(43) Veröffentlichungstag der Anmeldung: 28.09.2022
(73) Patentinhaber: Spitzer GesmbH, 8250 Vorau (AT)
(72) Erfinder: SPITZER, Herbert, 8250 Vorau (AT); SPITZER, Simone Maria, 8250 Vorau (AT)
(74) Vertreter: Gibler & Poth Patentanwälte KG
(86) Internationale Anmeldenummer: PCT/EP2020/080241
(87) Internationale Veröffentlichungsnummer: WO 2021/099078

(56) Entgegenhaltungen:
- EP-A1- 0 748 250
- EP-B1- 0 748 250
- DE-A1- 2 243 723
- US-A- 4 787 982
- US-A- 5 738 792
- US-A- 5 968 358
- US-A1- 2002 168 758
- US-A1- 2008 000 824
- US-A1- 2013 333 178
- US-B1- 6 372 495

## Beschreibung

Die Erfindung betrifft eine Filtervorrichtung gemäß dem Oberbegriff des Patentanspruches 1.

Es ist bekannt, dass einige Suspensionen und insbesondere verschmutztes Wasser mittels einer Filtervorrichtung umfassend einen porösen Filter zumindest teilweise gereinigt werden können. In der Regel weist solch ein Filter eine poröse Membran auf durch welche eine zu filtrierende Flüssigkeit, insbesondere eine Suspension, durchgeleitet wird. Hierbei verweilen Partikel von Feststoffen, welche nicht durch die Poren der Membran passen, sogenanntes Retentat, an der Membran während ein Permeat die Membran durchtritt. Je nach gewünschtem Reinheitsgrad des Filtrats kann das Permeat mittels weiterer Filter mit kleinerem Porendurchmesser weiter von suspendierten Stoffen gereinigt werden.

Zur Reinigung der Membran von dem Retentat wird diese in der Regel rückgespült. Hierbei wird die Membran in umgekehrter Richtung von einem Spülfluid bzw. von bereits gereinigter Lösung durchflossen, wobei sich im Idealfall ein Teil des Retentats von der Membran löst.

Nachteilig an Filtervorrichtungen mit porösen Filtern ist, dass ein konventionelles Rückspülen oftmals unzureichende Resultate liefert und manche Filter nur mit einem zusätzlichen Aufwand rückgewaschen werden können. Hierbei kommt es häufig zu sogenanntem Membranfouling, einem Leistungsabfall durch einen steigenden Membranwiderstand bei fortschreitender Betriebszeit durch eine immer dicker werdende Retentatschicht an der Membran. Membranfouling wird im Wesentlichen durch eine erhöhte Partikelkonzentration der zu behandelnden Flüssigkeit sowie der Zusammensetzung gelöster Inhaltsstoffe bedingt.

Die US 2002/0168758 A1 zeigt einen Bioreaktor mit einer dreiteiligen Anordnung zum Reinigen von Blut oder Plasma, wobei in einer äußeren Anordnung Zellen entwickelt, in einer mittleren Anordnung Blut oder Plasma fließt und in einer inneren Anordnung ein Fluid angeordnet ist.

Die US 2013/0333178 A1 zeigt einen Bioreaktor und eine Methode zur Anwendung des Bioreaktors. Dabei umfasst der Bioreaktor drei Kammern und drei mit den Kammern verbundene Kanäle. Dabei weist eine erste Kammer eine zu reinigende Substanz, eine zweite Kammer einen Reiniger und eine dritte Kammer eine Flüssigkeit auf.

Die US 6,372,495 B1 zeigt einen Bioreaktor für die Kultivierung von Zellen mit Hilfe eines 3D-Matrix-Materials.

Die US 5,968,358 A zeigt eine Methode zum Waschen einer Hohlfasermembran, welche für Blutdialyse verwendet wird.

Die US 5,738,792 A zeigt ein Verfahren zur Filterung von Materie einer flüssigen Lösung durch eine Membran mittels eines Rotors innerhalb eines konzentrischen Gehäuses.

Die DE 2 243 723 A1 zeigt eine Einrichtung zur Reversosmose mit schlauchförmiger Membran- und Fließschichtanordnung.

Die EP 0 748 250 A1 zeigt eine Membranfilteranordnung bei der das zu filternde Fluid an der Retentatseite eines Membranfilters rezirkuliert wird und bei der das gefilterte Fluid auf der Permeatseite des Membranfilters derart rezirkuliert wird, dass die beiden Ströme gleichzeitig entlang des Membranfilters geleitet werden.

Die US 4,787,982 A zeigt eine Anordnung umfassend eine flexible röhrenförmige halbdurchlässige Membran, welche in Geräten für Osmose, Dialyse and Elektrodialyse verwendet wird.

Die US 2008/0000824 A1 zeigt einen Cross-Flow Filter zur Filterung eines Ausgangsstoffes.

Aufgabe der Erfindung ist es daher eine Filtervorrichtung der eingangs genannten Art anzugeben, mit welcher die genannten Nachteile vermieden werden können, mit welcher Membranfouling wenigstens einer Membran der Doppelmembrananordnung verringert wird.

Erfindungsgemäß wird dies durch die Merkmale des Patentanspruches 1 erreicht.

Dadurch ergibt sich der Vorteil, dass Membranfouling wenigstens einer Membran der wenigstens einen Doppelmembrananordnung verringert wird. Dadurch, dass der Zwischenraum einen Spülkanal zum Spülen des Zwischenraumes umfasst, kann der Zwischenraum einfach und gründlich mit einem Spülfluid gespült werden, wodurch Retentat von wenigstens einer Membran entfernt wird. Um im Wesentlichen den ganzen Zwischenraum zu spülen, ist vorgesehen, dass sich der Spülkanal von wenigstens einem dritten Anschluss zum Einleiten eines Spülfluids in den Zwischenraum zu wenigstens einem vierten Anschluss zum Ableiten des Spülfluids aus dem Zwischenraum erstreckt, und dass der wenigstens eine dritte Anschluss und der wenigstens eine vierte Anschluss in den Zwischenraum münden. Aufgrund der verbesserten Entfernung von Retentat und des dadurch stark verringerten Membranfoulings wird auch der Wartungsbedarf der Filtervorrichtung deutlich verringert und eine konstante Durchflussleistung des zu filtrierenden Fluids durch die Doppelmembrananordnung ermöglicht.

Die Erfindung betrifft weiters ein Verfahren zum Betreiben einer Filtervorrichtung gemäß dem Patentanspruch 11.

Die Erfindung hat daher weiters die Aufgabe ein Verfahren der eingangs genannten Art anzugeben, mit welchem die genannten Nachteile vermieden werden können, mit welcher Membranfouling wenigstens einer Membran der Doppelmembrananordnung verringert wird.

Erfindungsgemäß wird dies durch die Merkmale des Patentanspruches 11 erreicht.

Die Vorteile des Verfahrens entsprechen den Vorteilen des oben genannten Filters.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Falls zwischen der zweiten Membran und dem wenigstens einen zweiten Anschluss wenigstens ein Adsorptionsfilter angeordnet ist, ergibt sich der Vorteil, dass mittels der Filtervorrichtung zusätzlich zu Partikeln Spurenstoffe wie Arzneimittel, Röntgenkontrastmittel, Körperpflegeprodukte, Reinigungsmittel, Weichmacher, Biozide, Mikroplastik, Komplexbildner, Pflanzenschutzmittel, Flammschutzmittel, Veterinärpharmaka und die Metabolite einer oder mehrerer der zuvor genannten Verbindungen aus einem Fluid, insbesondere aus einer Flüssigkeit wie beispielsweise Abwasser, gefiltert werden können.

Durch die Kombination der wenigstens einen Doppelmembrananordnung mit wenigstens einem Adsorptionsfilter in der Filtervorrichtung wird es ermöglicht mittels einer Filtervorrichtung Feststoffpartikel und Spurenstoffe aus Fluiden, insbesondere aus Flüssigkeiten, zu filtern. Hierdurch sind keine einzelnen nacheinander angeordneten Filtermodule und keine diese einzelnen Filtermodule verbindenden Leitungssysteme notwendig, wodurch der Platzbedarf reduziert und die Steuerungstechnik vereinfacht wird.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine bevorzugte Ausführungsform einer Filtervorrichtung als Prinzipskizze in axonometrischer Ansicht;
Fig. 2 die bevorzugte Ausführungsform der Filtervorrichtung in einem Schnitt in axonometrischer Ansicht;
Fig. 3 die bevorzugte Ausführungsform der Filtervorrichtung in einem Längsschnitt;
Fig. 4 eine schematische Ansicht eines Dead-End Filtrationsvorgangs in der bevorzugten Ausführungsform der Filtervorrichtung in dem Längsschnitt;
Fig. 5 eine schematische Ansicht eines Cross-Flow Filtrationsvorgangs in der bevorzugten Ausführungsform der Filtervorrichtung in dem Längsschnitt;
Fig. 6 eine schematische Ansicht eines ersten tangentialen Spülvorgangs wenigstens einer ersten Membran in der bevorzugten Ausführungsform der Filtervorrichtung in dem Längsschnitt;
Fig. 7 eine schematische Ansicht eines zweiten tangentialen Spülvorgangs der wenigstens einen ersten Membran in der bevorzugten Ausführungsform der Filtervorrichtung in dem Längsschnitt;
Fig. 8 eine schematische Ansicht eines dritten tangentialen Spülvorgangs der wenigstens einen ersten Membran in der bevorzugten Ausführungsform der Filtervorrichtung in dem Längsschnitt;
Fig. 9 eine schematische Ansicht eines ersten tangentialen Spülvorgangs wenigstens eines Zwischenraumes in der bevorzugten Ausführungsform der Filtervorrichtung in dem Längsschnitt;
Fig. 10 eine schematische Ansicht eines zweiten tangentialen Spülvorgangs des wenigstens einen Zwischenraumes in der bevorzugten Ausführungsform der Filtervorrichtung in dem Längsschnitt;
Fig. 11 eine schematische Ansicht eines tangentialen Spülvorgangs wenigstens eines Zwischenraumes gleichzeitig mit einer Spülung wenigstens einer ersten Membran in der bevorzugten Ausführungsform der Filtervorrichtung in dem Längsschnitt;
Fig. 12 eine schematische Ansicht eines ersten vertikalen Spülvorgangs wenigstens eines Zwischenraumes und gleichzeitig wenigstens einer ersten Membran in der bevorzugten Ausführungsform der Filtervorrichtung in dem Längsschnitt;
Fig. 13 eine schematische Ansicht eines zweiten vertikalen Spülvorgangs wenigstens eines Zwischenraumes und gleichzeitig wenigstens einer ersten Membran in der bevorzugten Ausführungsform der Filtervorrichtung in dem Längsschnitt;
Fig. 14 eine schematische Ansicht eines dritten vertikalen Spülvorgangs wenigstens eines Zwischenraumes und gleichzeitig wenigstens einer ersten Membran in der bevorzugten Ausführungsform der Filtervorrichtung in dem Längsschnitt;
Fig. 15 eine schematische Ansicht eines vierten vertikalen Spülvorgangs wenigstens eines Zwischenraumes und gleichzeitig wenigstens einer ersten Membran in der bevorzugten Ausführungsform der Filtervorrichtung in dem Längsschnitt;
Fig. 16 eine schematische Ansicht eines ersten Spülvorgangs über ein zwischen Doppelmembrananordnungen angeordnetes Adsorptionsmittel in der bevorzugten Ausführungsform der Filtervorrichtung in dem Längsschnitt;
Fig. 17 eine schematische Ansicht eines zweiten Spülvorgangs über ein zwischen Doppelmembrananordnungen angeordnetes Adsorptionsmittel in der bevorzugten Ausführungsform der Filtervorrichtung in dem Längsschnitt und
Fig. 18 eine schematische Ansicht eines Spülvorgangs eines Adsorptionsfilters.

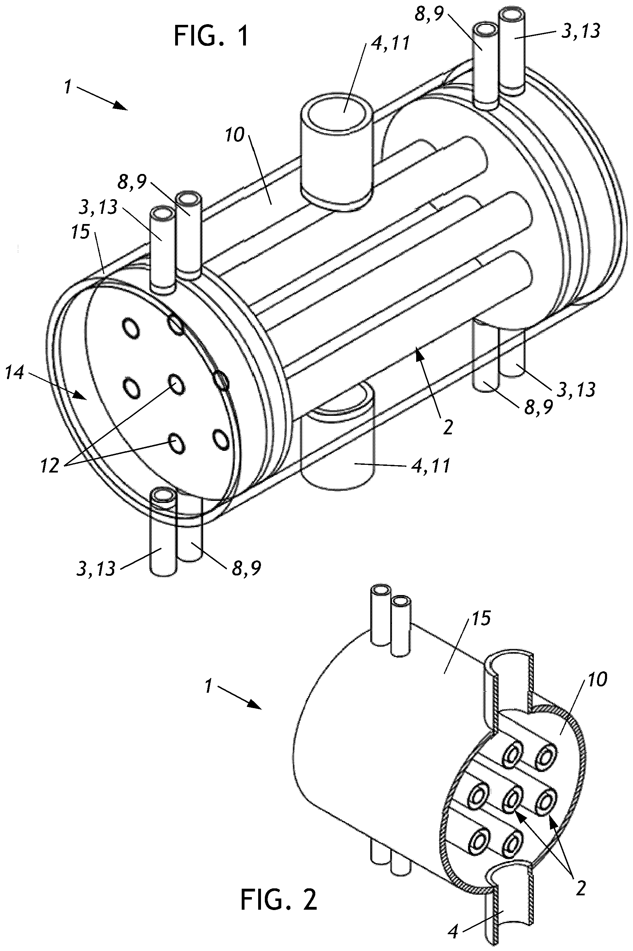

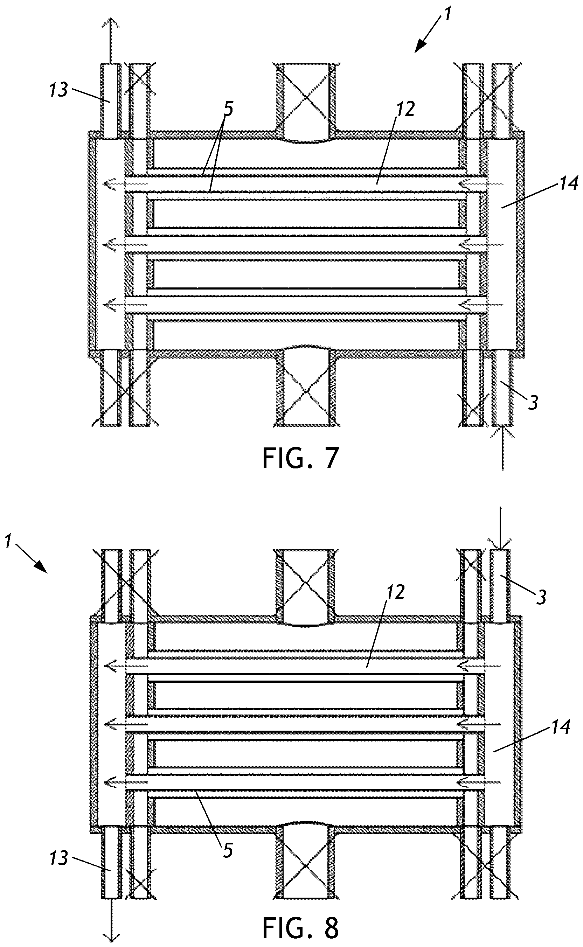

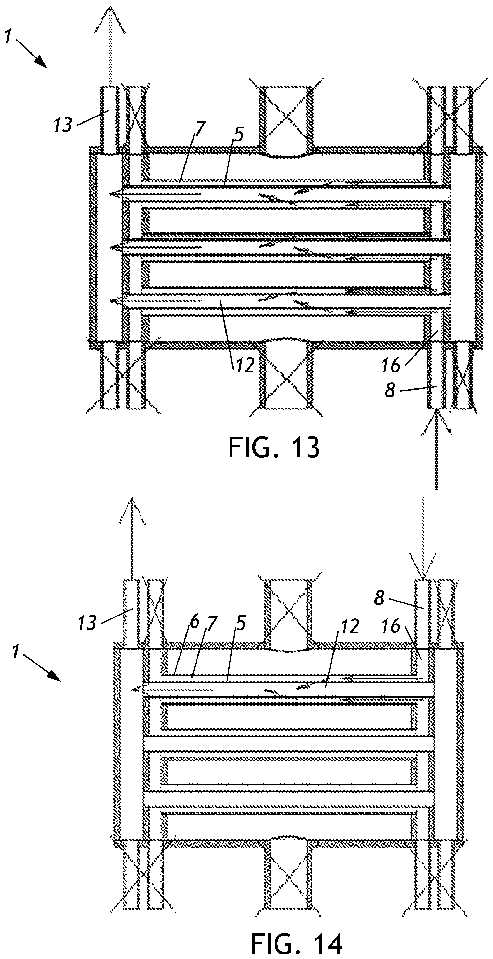

Die Fig. 1 bis 18 zeigen zumindest Teile einer bevorzugten Ausführungsform einer Filtervorrichtung 1 zur Filtration eines zu filtrierenden Fluids mit wenigstens einer Doppelmembrananordnung 2, wobei die Filtervorrichtung 1 wenigstens einen ersten Anschluss 3 zum Einleiten des zu filtrierenden Fluids in die wenigstens eine Doppelmembrananordnung 2 und wenigstens einen zweiten Anschluss 4 zum Ableiten eines Filtrats des zu filtrierenden Fluids aus der Filtervorrichtung 1 aufweist, wobei die wenigstens eine Doppelmembrananordnung 2 - in Durchflussrichtung des zu filtrierenden Fluids gesehen - eine erste Membran 5 und nachfolgend eine zweite Membran 6 aufweist, wobei zwischen der ersten Membran 5 und der zweiten Membran 6 ein Zwischenraum 7 ausgebildet ist, wobei der Zwischenraum 7 einen Spülkanal zum Spülen des Zwischenraumes 7 umfasst, dass sich der Spülkanal von wenigstens einem dritten Anschluss 8 zum Einleiten eines Spülfluids in den Zwischenraum 7 zu wenigstens einem vierten Anschluss 9 zum Ableiten des Spülfluids aus dem Zwischenraum 7 erstreckt, und dass der wenigstens eine dritte Anschluss 8 und der wenigstens eine vierte Anschluss 9 in den Zwischenraum 7 münden.

Weiters ist ein Verfahren zum Betreiben einer Filtervorrichtung 1 vorgesehen, wobei in einem Filtriervorgang ein zu filtrierendes Fluid durch wenigstens einen ersten Anschluss 3 durch wenigstens eine Doppelmembrananordnung 2 der Filtervorrichtung 1 geleitet wird, wobei das zu filtrierende Fluid anschließend zuerst durch eine erste Membran 5 und nachfolgend durch eine zweite Membran 6 der wenigstens einen Doppelmembrananordnung 2 geleitet wird, wobei zwischen der ersten Membran 5 und der zweiten Membran 6 ein Zwischenraum 7 ausgebildet ist, wobei nachfolgend ein Filtrat des zu filtrierenden Fluids aus der Filtervorrichtung 1 über wenigstens einen zweiten Anschluss 4 abgeleitet wird, wobei in einem Spülvorgang ein Spülfluid durch wenigstens einen dritten Anschluss 8 in einen von dem Zwischenraum 7 umfassten Spülkanal eingeleitet wird, wobei sich der Spülkanal von dem wenigstens einen dritten Anschluss 8 zu wenigstens einem vierten Anschluss 9 erstreckt, wobei das Spülfluid durch den Spülkanal zu dem wenigstens einen vierten 9 Anschluss geleitet wird und der Zwischenraum 7 gespült wird, und das Spülfluid mittels des wenigstens einen vierten Anschlusses 9 aus dem Zwischenraum 7 abgeleitet wird.

Die Filtervorrichtung 1 dient zur Filtration eines Fluids, insbesondere einer zu filtrierenden Flüssigkeit. Die Filtervorrichtung 1 weist wenigstens eine Doppelmembrananordnung 2 auf. Die Filtervorrichtung weist weiters wenigstens einen ersten Anschluss 3 zum Einleiten des zu filtrierenden Fluids durch die wenigstens eine Doppelmembrananordnung 2 und wenigstens einen zweiten Anschluss 4 zum Ableiten eines Filtrats des zu filtrierenden Fluids aus der Filtervorrichtung 1 auf. Die wenigstens eine Doppelmembrananordnung 2 weist - in Durchflussrichtung des zu filtrierenden Fluids gesehen - eine erste Membran 5 und nachfolgend eine zweite Membran 6 auf. Das zu filtrierende Ffluid wird anschließend nach dem Einleiten in die Doppelmembrananordnung 2 durch eine erste Membran 5 und nachfolgend durch eine zweite Membran 6 der wenigstens einen Doppelmembrananordnung 2 geleitet. Bei dem Durchfließen durch die erste Membran 5 werden, insbesondere Feststoffpartikel, an der ersten Membran 5 zurückgehalten. Diese Feststoffpartikel weisen hierbei insbesondere einen größeren Durchmesser als den Porendurchmesser der ersten Membran 5 auf. Die zurückgehaltenen Feststoffpartikel, sogenanntes Retentat, verweilt an der ersten Membran 5, während Permeat die erste Membran 5 durchdringt und in einen zwischen der ersten Membran 5 und der zweiten Membran 6 ausgebildeten Zwischenraum 7 gelangt. Nachfolgend fließt dieses Permeat zu der zweiten Membran 6, wobei ein weiteres Retentat an der zweiten Membran 6 zurückgehalten wird und ein weiteres Permeat die zweite Membran 6 durchdringt. Dieses weitere Permeat kann bereits das gewünschte Filtrat sein und aus der Filtervorrichtung 1 abgeleitet werden, das weitere Permeat kann aber auch noch weiter gefiltert werden. Dies ergibt insbesondere einen Sinn, wenn neben Feststoffpartikeln auch Spurenstoffe aus dem zu filtrierenden Fluid entfernt werden sollen.

Das zu filtrierende Fluid kann bevorzugt eine Flüssigkeit sein.

Das zu filtrierende Fluid kann aber auch ein Gas sein.

In einem Spülvorgang wird ein Spülfluid durch wenigstens einen dritten Anschluss 8 in einen von dem Zwischenraum 7 umfassten Spülkanal eingeleitet, wobei sich der Spülkanal von dem wenigstens einen dritten Anschluss 8 zu wenigstens einem vierten Anschluss 9 erstreckt. Das Spülfluid wird durch den Spülkanal zu dem wenigstens einen vierten 9 Anschluss geleitet, wodurch im Wesentlichen der gesamte Zwischenraum 7 gespült wird. Das mit Retentat, insbesondere dem weiteren Retentat von der zweiten Membran 6, kontaminierte Spülfluid wird dann mittels des wenigstens einen vierten Anschlusses 9 aus dem Zwischenraum 7 abgeleitet.

Dadurch ergibt sich der Vorteil, dass Membranfouling wenigstens einer Membran 5, 6 der wenigstens einen Doppelmembrananordnung 2 verringert wird. Dadurch, dass der Zwischenraum 7 einen Spülkanal zum Spülen des Zwischenraumes 7 umfasst, kann der Zwischenraum 7 einfach und gründlich mit einem Spülfluid gespült werden, wodurch Retentat von wenigstens einer Membran 5, 6 entfernt wird. Um im Wesentlichen den ganzen Zwischenraum 7 zu spülen, ist vorgesehen, dass sich der Spülkanal von wenigstens einem dritten Anschluss 8 zum Einleiten eines Spülfluids in den Zwischenraum 7 zu wenigstens einem vierten Anschluss 9 zum Ableiten des Spülfluids aus dem Zwischenraum 7 erstreckt, und dass der wenigstens eine dritte Anschluss 8 und der wenigstens eine vierte Anschluss 9 in den Zwischenraum 7 münden. Aufgrund der verbesserten Entfernung von Retentat und des dadurch stark verringerten Membranfoulings wird auch der Wartungsbedarf der Filtervorrichtung 1 deutlich verringert und eine konstante Durchflussleistung des zu filtrierenden Fluids durch die Doppelmembrananordnung 2 ermöglicht.

In Zeiten zunehmenden Umweltbewusstseins gewinnt die Filtration von Spurenstoffen wie beispielsweise Arzneimitteln, Röntgenkontrastmitteln, Körperpflegeprodukten, Reinigungsmitteln, Weichmachern, Bioziden, Mikroplastik, Komplexbildnern, Pflanzenschutzmitteln, Flammschutzmitteln, Veterinärpharmaka sowie von Metaboliten der zuvor genannten Verbindungen in dem Bereich der Abwasseraufbereitung stark an Bedeutung. Hierzu ist bekannt, dass abgesehen von einer direkten Umweltschädigung durch diese Substanzen diese Substanzen in das Grundwasser gelangen können, wo sie potentielles Trinkwasser für Menschen und Tiere kontaminieren können. Weiters kann verschmutztes Wasser von Pflanzen aufgenommen werden. Eine häufige Einnahme, selbst bei geringen Mengen von mit diesen Substanzen kontaminiertem Wasser, Pflanzen und/oder Tieren kann Agglomerationseffekte von Schadstoffen und dadurch bedingte unterschiedliche Krankheiten von Menschen und Tieren auslösen. Zur Filtration von Spurenstoffen werden in der Regel Adsorptionsfilter eingesetzt. Diese Adsorptionsfilter sind meist eigene Filtermodule, durch welche das zu filtrierende Fluid durchgeleitet wird.

Um Partikel und Spurenstoffe aus Fluiden, insbesondere aus Flüssigkeiten, wie beispielsweise Abwasser, zu filtern werden in der Regel wenigstens ein eigenes Modul mit einem oder mehreren porösen Filtern und nachfolgend wenigstens ein eigenes Modul mit einem oder mehreren Adsorptionsfiltern verwendet, wodurch ein erhöhter Platzbedarf und eine aufwendige Installation der einzelnen Module mit zusätzlichen Leitungen nötig ist.

Besonders bevorzugt kann vorgesehen sein, dass zwischen der zweiten Membran 6 und dem wenigstens einen zweiten Anschluss 4 wenigstens ein Adsorptionsfilter 10 angeordnet ist. Hierdurch ergibt sich der Vorteil, dass mittels der Filtervorrichtung 1 zusätzlich zu Partikeln Spurenstoffe wie Arzneimittel, Röntgenkontrastmittel, Körperpflegeprodukte, Reinigungsmittel, Weichmacher, Biozide, Mikroplastik, Komplexbildner, Pflanzenschutzmittel, Flammschutzmittel, Veterinärpharmaka sowie Metabolite einer oder mehrerer der zuvor genannten Verbindungen aus einem Fluid, insbesondere aus einer Flüssigkeit wie beispielsweise Abwasser, gefiltert werden können.

Durch die Kombination der wenigstens einen Doppelmembrananordnung 2 mit wenigstens einem Adsorptionsfilter 10 in der Filtervorrichtung 1 wird es ermöglicht mittels einer Filtervorrichtung 1 Feststoffpartikel und Spurenstoffe aus Fluiden, insbesondere aus Flüssigkeiten, zu filtern. Hierdurch sind keine einzelnen nacheinander angeordneten Filtermodule und keine diese einzelnen Filtermodule verbindenden Leitungssysteme mehr notwendig, wodurch der Platzbedarf reduziert und die Steuerungstechnik vereinfacht wird.

Bevorzugt kann vorgesehen sein, dass der Adsorptionsfilter 10 Aktivkohle und/oder Zeolithe umfasst. Aktivkohle weist stark adsorbierende Eigenschaften sowie eine große innere Oberfläche auf, wodurch Spurenstoffe besonders gut adsorbiert werden können. Als Zeolithe werden kristalline Alumosilikate bezeichnet, welche eine lockere, dreidimensional vernetzte Struktur aufweisen und insbesondere als Molekularsiebe verwendet werden.

Es kann vorgesehen sein, dass die Zeolithe natürlich vorkommende Zeolithe und/oder synthetisch hergestellte Zeolithe sind.

Es kann vorgesehen sein, dass der Adsorptionsfilter 10 Stoffe umfasst, die physisorptiv und/oder chemisorptiv wirken.

Es kann bevorzugt vorgesehen sein, dass die Filtervorrichtung 1 ein Gehäuse 15 umfasst, wobei die wenigstens eine Doppelmembrananordnung 2 im Wesentlichen in dem Gehäuse 15 angeordnet ist.

Bevorzugt kann vorgesehen sein, dass die Filtervorrichtung 1 mehrere Doppelmembrananordnungen 6, vorzugsweise vier, insbesondere fünf, bevorzugt sieben, Doppelmembrananordnungen 6, aufweist.

Es kann besonders bevorzugt vorgesehen sein, dass der Adsorptionsfilter 10 durch einen, die wenigstens eine Doppelmembrananordnung 2 umgebenden Raum des Gehäuses 15 mit in dem Raum angeordnetem Adsorptionsmittel ausgebildet wird.

Hierbei kann bevorzugt vorgesehen sein, dass das Adsorptionsmittel die wenigstens eine Doppelmembrananordnung 2, insbesondere die zweite Membran 6 der wenigstens einen Doppelmembrananordnung 2, im Wesentlichen unmittelbar umgibt bzw. umhüllt.

In den nachfolgend beschriebenen Figuren ist die Flussrichtung des Spülfluids und/oder die Flussrichtung des zu filtrierenden Fluids beispielhaft durch Pfeile veranschaulicht.

Vorzugsweise kann vorgesehen sein, dass der Adsorptionsfilter 10 den die wenigstens eine Doppelmembrananordnung 2 umgebenden Raum des Gehäuses 15 im Wesentlichen ausfüllt, was beispielhaft in den Fig. 1 und 2 abgebildet ist.

Bevorzugt kann vorgesehen sein, dass der wenigstens eine zweite Anschluss 4 einen Polizeifilter 11 aufweist. Der Polizeifilter 11 kann hierbei in dem zweiten Anschluss 4 angeordnet, beispielsweise verschraubt, sein.

Es kann auch vorgesehen sein, dass der Polizeifilter 11 im Wesentlichen unmittelbar vor dem zweiten Anschluss 4 angeordnet ist.

Bevorzugt übernimmt der Polizeifilter 11 einerseits eine Endreinigungsfunktion und andererseits eine Sicherungsfunktion. Falls einer oder mehrere der vorgeschalteten Filter, beispielsweise aufgrund einer Beschädigung, ausfallen, kann mittels des Polizeifilters 11 das zu filtrierende Fluid zumindest teilweise gefiltert werden.

Bevorzugt kann vorgesehen sein, dass der Polizeifilter 11 Aktivkohle, insbesondere einen Aktivkohleadsorber, umfasst.

Weiters kann bevorzugt vorgesehen sein, dass eine Porengröße der ersten Membran 5 größer als eine Porengröße der zweiten Membran 6 ist. Vorteilhaft ist hierbei, dass zuerst Retentat mit größeren Partikeln an der ersten Membran 5 zurückgehalten wird und anschließend das weitere Retentat mit kleineren Partikeln an der zweiten Membran 6 zurückgehalten wird.

Hierzu kann bevorzugt vorgesehen sein, dass eine Porengröße der ersten Membran 5 wenigstens 0,1 µm, insbesondere wenigstens 1,5 µm, bevorzugt wenigstens 3 µm, beträgt.

Bevorzugt kann vorgesehen sein, dass eine Porengröße der ersten Membran 5 maximal 4 µm, insbesondere maximal 5 µm, bevorzugt maximal 6 µm, beträgt.

Es kann weiters vorgesehen sein, dass eine Porengröße der zweiten Membran 6 wenigstens 0,01 µm, insbesondere wenigstens 0,025 µm, bevorzugt wenigstens 0,05 µm, beträgt.

Weiters kann vorgesehen sein, dass eine Porengröße der zweiten Membran 6 maximal 0,06 µm, insbesondere maximal 0,08 µm, bevorzugt maximal 0,1 µm, beträgt.

Durch die unterschiedlichen Porengrößen der ersten Membran 5 und der zweiten Membran 6 können selektiv Partikel in unterschiedlichen Größen an den jeweiligen Membranen 5, 6 gefiltert werden. Hierdurch wird vermieden, dass sich, wie beispielsweise bei der Verwendung einer einzelnen Membran mit einer kleinen Porengröße rasch eine Dicke Schicht aus Retentat, auch als Filterkuchen bezeichnet, mit unterschiedlichen Partikelgrößen bildet und Membranfouling begünstigt wird.

Bevorzugt kann vorgesehen sein, dass die erste Membran 5 und/ oder die zweite Membran 6 wenigstens einen Thermoplast, insbesondere wenigstens ein Polysulfon und/oder wenigstens ein Polyehtersulfon und/oder wenigstens ein Polyvinylidenfluorid und/oder wenigstens ein Polypropylen und/oder wenigstens ein Polyamid, umfassen. Vorteilhaft ist hierbei, dass die erste Membran 5 und/oder die zweite Membran 6 einfach herzustellen und gegen einige Lösungsmittel und/oder Säuren und/oder. Laugen chemisch widerstandsfähig sind.

Besonders bevorzugt kann vorgesehen sein, dass die erste Membran 5 und/ oder die zweite Membran 6 wenigstens ein keramisches Material, insbesondere Al₂O₃ und/oder TiO₂ und/oder ZrO₂, umfassen. Vorteilhaft ist hierbei, dass die erste Membran 5 und/oder die zweite Membran 6, insbesondere mechanisch, besonders widerstandsfähig und einfach zu reinigen sind.

Bevorzugt kann vorgesehen sein, dass eine Dicke der ersten Membran 5 und/oder der zweiten Membran 6 wenigstens 8 µm, bevorzugt wenigstens 100 µm, insbesondere wenigstens 150 µm, beträgt.

Besonders bevorzugt kann vorgesehen sein, dass die Dicke der ersten Membran 5 und/oder der zweiten Membran 6 maximal 200 µm, insbesondere maximal 300 µm, bevorzugt maximal 400 µm, beträgt.

Es hat sich gezeigt, dass bei den zuvor genannten Dicken der ersten Membran 5 und/oder der zweiten Membran 6 besonders gut filtriert werden kann.

Besonders bevorzugt kann vorgesehen sein, dass die erste Membran 5 und die zweite Membran 6 röhrenförmig ausgebildet sind, wobei die erste Membran 5 im Wesentlichen innerhalb des von der zweiten Membran 6 aufgespannten Raumes angeordnet ist, wodurch der Zwischenraum 7 besonders einfach ausgebildet werden kann.

Besonders bevorzugt kann vorgesehen sein, dass die erste Membran 5 koaxial zu der zweiten Membran 6 angeordnet ist.

Vorteilhaft ist hierbei, dass diese Anordnung der Membranen 5, 6 besonders platzsparend ist und trotz des geringen Raumbedarfs der Membranen 5, 6 eine große Oberfläche der Membranen 5, 6 erzielt wird.

Es kann auch bevorzugt vorgesehen sein, dass die erste Membran 5 und zweite Membran 6 im Wesentlichen hohlzylindrisch ausgebildet sind.

Es kann hierzu bevorzugt vorgesehen sein, dass die erste Membran 5 einen kleineren Durchmesser als die zweite Membran 6 aufweist, was beispielhaft in Fig. 2 veranschaulicht ist.

Alternativ kann vorgesehen sein, dass die erste Membran 5 und/oder die zweite Membran 6 plattenförmig ausgebildet sind. Hierdurch kann ein besonders einfacher Aufbau erreicht werden.

Bevorzugt kann vorgesehen sein, dass eine Breite des Zwischenraumes 7 wenigstens 0,5 mm, bevorzugt wenigstens 1, 5 mm, insbesondere wenigstens 3 mm, beträgt.

Es kann auch bevorzugt vorgesehen sein, dass eine Breite des Zwischenraumes 7 maximal 6 mm, insbesondere maximal 5 mm, bevorzugt maximal 4 mm, beträgt.

Es hat sich gezeigt, dass bei oben genannten Breiten des Zwischenraumes 7 der Zwischenraum 7 besonders gut mit einem Spülfluid gespült werden kann.

Besonders bevorzugt kann vorgesehen sein, dass die Filtervorrichtung 1 einen Einströmraum 14 aufweist, wobei der wenigstens eine erste Anschluss 3 in den Einströmraum 14 mündet, wobei sich die erste Membran 5 von dem Einströmraum 14 weg erstreckt, was beispielhaft in den Fig. 1 und 3 bis 18 gezeigt ist.

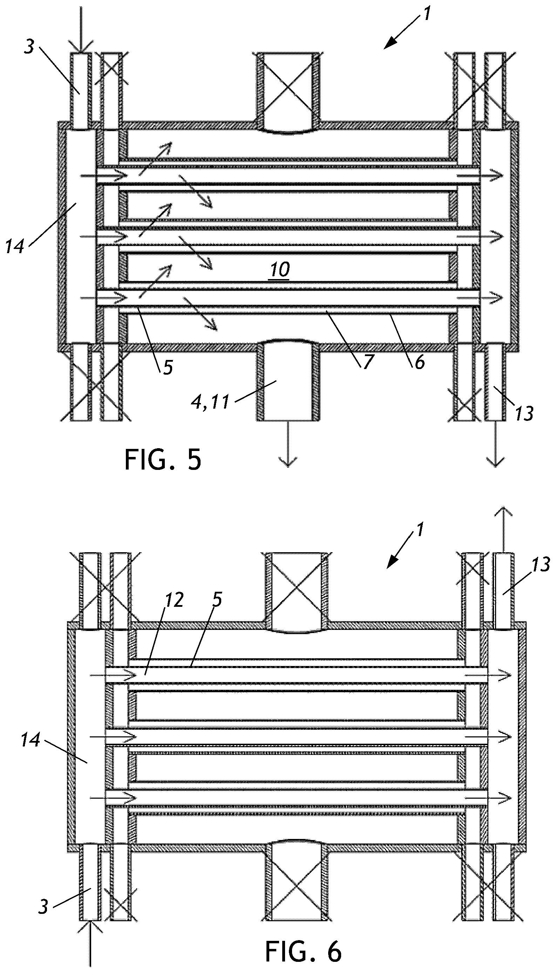

Bevorzugt kann vorgesehen sein, dass in einem weiteren Spülvorgang das Spülfluid zuerst durch den wenigstens einen ersten Anschluss 3 in den Einströmraum 14 der Filtervorrichtung 1 fließt, wobei die erste Membran 5 röhrenförmig ausgebildet ist und in den Einströmraum 14 mündet, wobei das Spülfluid anschließend in einen Innenraum 12 der ersten Membran 5 fließt und den Innenraum 12 durchspült, wobei sich der Innenraum 12 von dem wenigstens einen ersten Anschluss 3 zu wenigstens einem fünften Anschluss 13 erstreckt, wobei das Spülfluid von dem wenigstens einen fünften Anschluss 13 aus der Filtervorrichtung 1 abgeleitet wird, was beispielhaft in den Fig.6 bis 8 gezeigt ist. Bei diesen, in den Fig. 6 bis 8 beispielhaft dargestellten sogenannten tangentialen Spülvorgängen wird insbesondere das Retentat von der Innenwandung der ersten Membran 5 entfernt.

Tangential bedeutet hierbei, dass das Spülfluid oder das zu filtrierende Fluid den Zwischenraum 7 und/oder den Innenraum 12 der ersten Membran 5 durchfließt ohne im Wesentlichen durch die erste Membran 5 oder durch die zweite Membran 6 durchzudringen.

Bevorzugt kann vorgesehen sein, dass mehrere erste Membranen 5 mehrerer Doppelmembrananordnungen 2 in den Einströmraum 14 münden, wodurch sich der Vorteil ergibt, dass das zu filtrierende Fluid oder das Spülfluid gleichmäßig auf die mehreren ersten Membranen 5 der mehreren Doppelmembrananordnungen 2 aufgeteilt werden kann.

Es kann bevorzugt vorgesehen sein, dass der Innenraum 12 der ersten Membran 5 einen Fluidkanal umfasst, wobei sich der Fluidkanal von dem wenigstens einen ersten Anschluss 3 zu dem wenigstens einen fünften Anschluss 13 erstreckt.

Es kann auch vorgesehen sein, dass in dem Innenraum 12 der ersten Membran 5 wenigstens ein Adsorptionsfilter 10 angeordnet ist.

Es kann weiters vorgesehen sein, dass der Adsorptionsfilter 10 im Wesentlichen das Volumen des Innenraumes 12 der ersten Membran 5 ausfüllt.

Es kann auch vorgesehen sein, dass in dem Zwischenraum 7 wenigstens ein Adsorptionsfilter 10 angeordnet ist.

Es kann weiters vorgesehen sein, dass der Adsorptionsfilter 10 im Wesentlichen das Volumen des Zwischenraumes 7 ausfüllt.

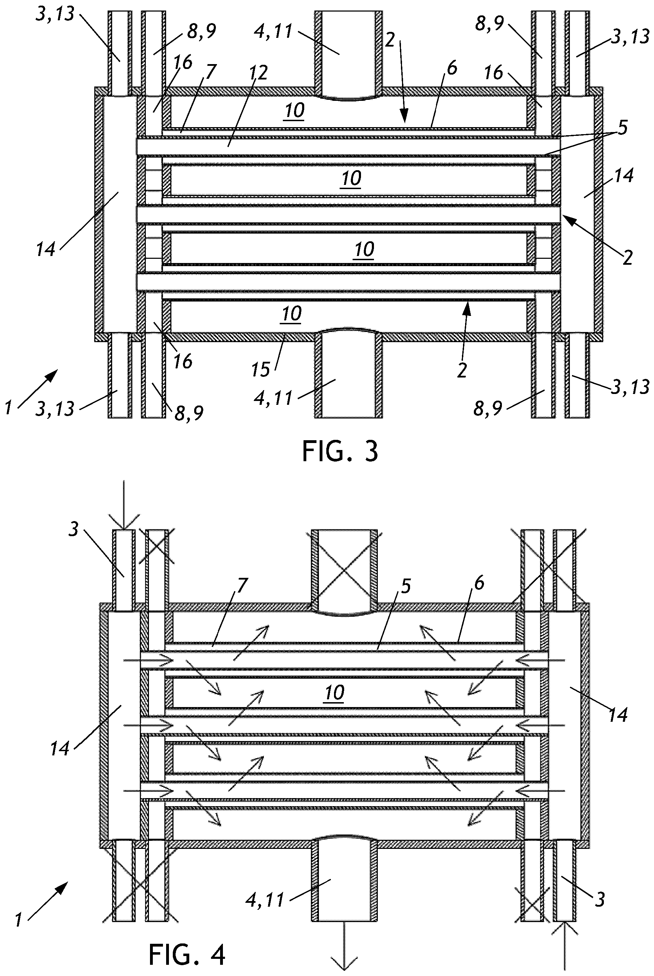

Weiters kann besonders bevorzugt vorgesehen sein, dass angrenzend zu dem Einströmraum 14 ein Spülraum 16 angeordnet ist, wobei die erste Membran 5 den Spülraum 16 durchdringt und der Zwischenraum 7 in den Spülraum 16 mündet, was beispielhaft in den Fig. 3 bis 18 dargestellt ist.

Bevorzugt kann vorgesehen sein, dass mehrere Zwischenräume 7 von mehreren Doppelmembrananordnungen 2 in den Spülraum 16 münden, wodurch Spülfluid einfach in die mehreren Zwischenräume 7 eingeleitet werden kann.

Besonders bevorzugt kann vorgesehen sein, dass der Spülvorgang in einer Unterbrechung des Filtriervorganges und/oder nach dem Filtriervorgang durchgeführt wird. Je nach der Menge des zu filtrierenden Fluids und je nach Kontaminationsgrad des zu filtrierenden Fluids mit Feststoffpartikeln und/oder Spurenstoffen und der damit einhergehenden Dicke der Retentatschicht an der ersten Membran 5 und/oder an der zweiten Membran 6 kann diese Schicht durch einen Spülvorgang entfernt werden, wodurch Membranfouling vermieden werden kann.

Besonders bevorzugt kann vorgesehen sein, dass die Filtervorrichtung 1 im Wesentlichen symmetrisch aufgebaut ist, was beispielhaft in Fig. 3 dargestellt ist. Fig. 3 zeigt eine Filtervorrichtung 1 mit einem Gehäuse 15, mehreren Doppelmembrananordnungen 2, umfassend mehrere erste Membranen 5 und mehrere zweite Membranen 6 sowie vier erste beziehungsweise fünfte Anschlüsse 3, 13, wobei zwei der ersten beziehungsweise fünften Anschlüsse 3, 13 in einen Einströmraum 14 und die anderen zwei der ersten beziehungsweise fünften Anschlüsse 3, 13 in einen weiteren Einströmraum 14 münden, mehrere durch die ersten Membranen 5 und durch die zweiten Membranen 6 ausgebildete Zwischenräume 7, die in einen Spülraum 16 und in einen weiteren Spülraum 16 münden, vier dritte beziehungsweise vierte Anschlüsse 8, 9 wobei zwei dritte beziehungsweise vierte Anschlüsse 8, 9 in den Spülraum 16 münden und zwei dritte beziehungsweise vierte Anschlüsse 8, 9, in einen weiteren Spülraum 16 münden, zwei gegenüberliegende zweite Anschlüsse 4 mit jeweils zwei Polizeifiltern 11 und zwischen den Doppelmembrananordnungen 2 angeordnetem Adsorptionsmittel, welches einen Adsorptionsfilter 10 ausbildet.

Hierdurch wird auf platzsparendem Wege eine sogenannte Multibarrierenvorrichtung geschaffen, mit welcher sowohl Feststoffpartikel als auch Spurenstoffe aus Fluiden, insbesondere aus Abwasser, gefiltert werden können.

Es kann hierbei bevorzugt vorgesehen sein, dass der erste Anschluss 3 mit dem fünften Anschluss 13 und der dritte Anschluss 8 mit dem vierten Anschluss 9 vertauscht werden können. Aufgrund der Symmetrie der in der Fig. 1 und Fig. 3 beispielhaft dargestellten Filtervorrichtung 1 bleibt die grundsätzliche Funktion der Filtervorrichtung 1 bei diesem Anschlusstausch gleich.

Bevorzugt kann vorgesehen sein, dass der erste Anschluss 3 und/oder der zweite Anschluss 4 und/oder der dritte Anschluss 8 und/oder der vierte Anschluss 9 und/oder der fünfte Anschluss 13 zweimal in der Filtervorrichtung 1 vorhanden sind. Vorteilhaft ist hierbei die Redundanz bei einem oder mehreren Spülvorgängen.

Aufgrund der Übersichtlichkeit werden die Anschlüsse 3, 4, 8, 9 und 13 je nach Verwendung mit einem entsprechenden Bezugszeichen bezeichnet, wobei in der Regel der erste Anschluss 3 einen Zufluss zu bevorzugt einem Innenraum 12 wenigstens einer ersten Membran 5, insbesondere zu einem Einströmraum 14, der zweite Anschluss 4 einen Zufluss oder Abfluss in das Gehäuse 15 oder aus dem Gehäuse 15, der dritte Anschluss 8 einen Zufluss zu wenigstens einem Zwischenraum 7, insbesondere zu einem Spülraum 16, der vierte Anschluss 9 einen Abfluss aus wenigstens einem Zwischenraum 7, insbesondere aus einem Spülraum 16, und der fünfte Anschluss 13 einen Abfluss aus bevorzugt einem Innenraum 12 wenigstens einer ersten Membran 5, insbesondere aus einem Einströmraum 14, bezeichnet, sofern dies nicht anders erwähnt wird.

Aufgrund der bevorzugten Symmetrie der Filtervorrichtung 1 ist der Tausch der zuvor genannten Anschlüsse zum Einleiten oder Ableiten von Fluiden in oder aus der Filtervorrichtung 1 möglich, wodurch verschiedene Arten der Filtration und des Spülvorganges, wie beispielhaft in nachfolgenden Filtrations- und Spülvorgängen gezeigt wird, ermöglicht wird.

Das "X" bei einem Anschluss in den Fig. 4 bis 18 bedeutet, dass dieser Anschluss für diesen Filtrationsvorgang oder Spülvorgang gesperrt ist.

Es kann bevorzugt vorgesehen sein, dass die Filtervorrichtung 1 im Wesentlichen sechs Bereiche aufweist, - von außen nach innen gesehen - zwei Einströmräume 14 mit jeweils wenigstens einem Anschluss zum Einleiten oder Ableiten eines zu filtrierenden Fluids oder eines Spülfluids in oder aus dem Einströmraum 14 bzw. der Filtervorrichtung 1, beispielsweise wenigstens einen ersten Anschluss 3 und wenigstens einen fünften Anschluss 13,jeweils angrenzend zu den Einströmräumen 14 jeweils einen Spülraum 16 mit jeweils wenigstens einem dritten Anschluss 8 und/ oder einem vierten Anschluss 9 und einen Mittelteil mit wenigstens einem zweiten Anschluss 4.

Bevorzugt kann hierzu vorgesehen sein, dass die Filtervorrichtung 1 um eine gedachte Achse durch den zweiten Anschluss 4 rotationssymmetrisch ist. Hierdurch ergibt sich der Vorteil, dass je nach Montagesituation die Filtervorrichtung 1 von einer linken Seite und von einer rechten Seite im Wesentlichen gleich betrieben werden kann.

Fig. 4 zeigt beispielhaft eine schematische Ansicht eines Dead-End Filtrationsvorgangs, bei welchem durch zwei schräg gegenüberliegende erste Anschlüsse 3 das zu filtrierende Fluid in jeweils einen Einströmraum 14 der Filtervorrichtung 1 eingeleitet wird und anschließend in die ersten Membranen 5 mehrerer Doppelmembrananordnungen 2 geleitet wird, wobei Retentat an den ersten Membranen 5 zurückgehalten wird und Permeat die ersten Membranen 5 durchdringt, wobei das Permeat in die von den ersten Membranen 5 mit den zweiten Membranen 6 ausgebildeten Zwischenräume 7 gelangt, wobei weiteres Retentat an den zweiten Membranen 6 zurückgehalten wird und weiteres Permeat die zweiten Membranen 6 durchdringt, wobei das weitere Permeat in den im Wesentlichen unmittelbar an den Doppelmembrananordnungen 2 angeordneten Adsorptionsfilter 10 gelangt, wobei der Adsorptionsfilter 10 Spurenstoffe, sofern vorhanden, aus dem weiteren Permeat filtern kann und das Filtrat zu dem zweiten Anschluss 4 gelangt und aus der Filtervorrichtung 1 abgeleitet wird. Es kann hierbei bevorzugt vorgesehen sein, dass der zweite Anschluss 4 einen Polizeifilter 11 aufweist.

Fig. 5 zeigt beispielhaft eine schematische Ansicht eines Cross-Flow Filtrationsvorgangs, bei welchem durch einen ersten Anschluss 3 das zu filtrierende Fluid in einen Einströmraum 14 eingeleitet wird und anschließend in die ersten Membranen 5 mehrerer Doppelmembrananordnungen 2 geleitet wird, wobei Retentat an den ersten Membranen 5 zurückgehalten wird und Permeat die ersten Membranen 5 durchdringt, wobei das Permeat in die von den ersten Membranen 5 mit den zweiten Membranen 6 ausgebildeten Zwischenräume 7 gelangt, wobei weiteres Retentat an den zweiten Membranen 6 zurückgehalten wird und weiteres Permeat die zweiten Membranen 6 durchdringt, wobei das weitere Permeat in den im Wesentlichen unmittelbar an den Doppelmembrananordnungen 2 angeordneten Adsorptionsfilter 10 gelangt, wobei der Adsorptionsfilter 10 Spurenstoffe, falls vorhanden, aus dem weiteren Permeat filtern kann und das Filtrat zu dem zweiten Anschluss 4 gelangt, aus welchem das Filtrat aus der Filtervorrichtung 1 abgeleitet wird, während mit Retentat kontaminiertes Fluid, insbesondere von der Innenwandung der ersten Membran 5, durch den fünften Anschluss 13 aus der Filtervorrichtung 1 abgeleitet wird. Hierzu kann das Retentat insbesondere einen großen Porendurchmesser aufweisen. Auch hier kann bevorzugt vorgesehen sein, dass der zweite Anschluss 4 einen Polizeifilter 11 aufweist, bzw. dass ein Polizeifilter 11 unmittelbar an dem zweiten Anschluss 4 angeordnet ist.

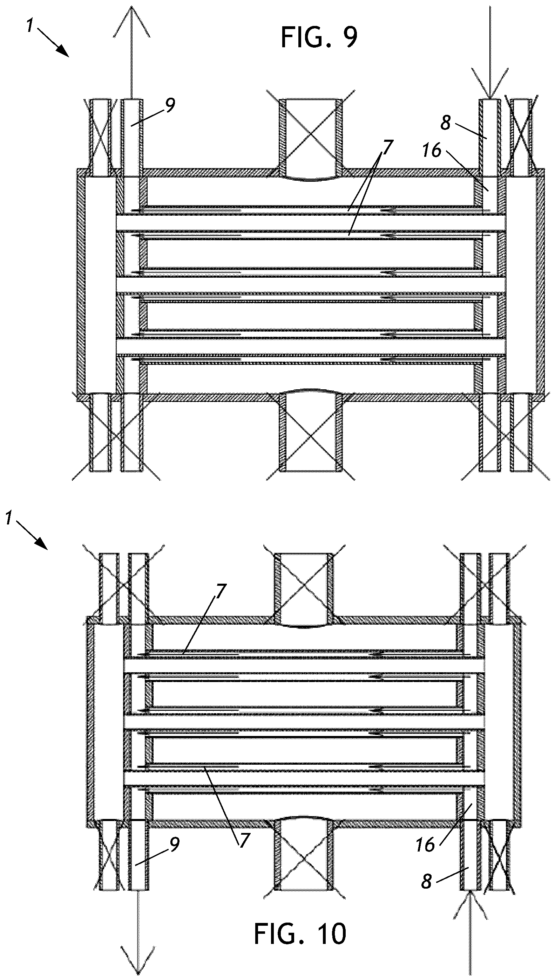

Die Fig. 9 und 10 zeigen beispielhaft tangentiale Spülvorgänge mehrerer Zwischenräume 7 mehrerer Doppelmembrananordnungen 2. Hierbei wird bevorzugt das Spülfluid durch wenigstens einen dritten Anschluss 8 in den Spülraum 16 eingeleitet, wobei das Spülfluid anschließend in die Spülkanäle der einzelnen Zwischenräume 7 geleitet wird und Retentat insbesondere von der Innenwandung der zweiten Membranen 6 entfernt. Das Gemisch aus Retentat und Spülfluid wird mittels wenigstens eines vierten Anschlusses 9 aus der Filtervorrichtung 1 abgeleitet.

Fig: 11 zeigt beispielhaft eine schematische Ansicht eines tangentialen Spülvorgangs wenigstens eines Zwischenraumes 7 gleichzeitig mit einer Spülung wenigstens einer ersten Membran 5. Hierbei wird bevorzugt das Spülfluid gleichzeitig durch einen ersten Anschluss 3 und einen, insbesondere gegenüberliegenden, dritten Anschluss 8 in die Filtervorrichtung 1 eingeleitet. Von dem dritten Anschluss 8 eingeleitetes Spülfluid spült wie zuvor beschrieben insbesondere tangential den wenigstens einen Zwischenraum 7 und von dem ersten Anschluss 3 eingeleitetes Spülfluid spült, wie zuvor beschrieben, insbesondere tangential den Innenraum 12 der ersten Membran 5. Es kann hierbei auch bevorzugt vorgesehen sein, dass Retentat, welches sich auch an einer dem Zwischenraum 7 zugewandten Seite der ersten Membran 5 befindet, bei dem Spülvorgang entfernt wird. Dieses Retentat kann beispielsweise durch Verwirbelungen des zu filtrierenden Fuids unmittelbar nach den Poren oder durch Wachstumseffekte an Partikeln, die von der ersten Membran 5 zurückgehalten werden, entstehen.

Hierbei kann vorgesehen sein, dass der wenigstens eine Zwischenraum 7 und der der Innenraum 12 der wenigstens einen ersten Membran 5 gleichzeitig gespült werden.

Es kann alternativ vorgesehen sein, dass der wenigstens eine Zwischenraum 7 und der Innenraum 12 der wenigstens einen ersten Membran 5 nacheinander gespült werden.

Es kann auch vorgesehen sein, dass ein Zwischenraum 7 einer Doppelmembrananordnung 2 und der Innenraum 12 einer ersten Membran 5 einer weiteren Doppelmembrananordnung 2 gleichzeitig oder nacheinander gespült werden. Beispielsweise kann dies mittels des Spülfluiddrucks an dem ersten Anschluss 3 und an dem dritten Anschluss 8 selektiv eingestellt werden.

Es kann bevorzugt vorgesehen sein, dass mit Feststoffpartikeln oder Spurenstoffen kontaminiertes Spülfluid vor dem Ableiten durch den vierten Anschluss 9 oder durch den fünften Anschluss 13 aus der Filtervorrichtung 1 in wenigstens einen Einströmraum 14 oder in wenigstens einen Spülraum 16 geleitet wird.

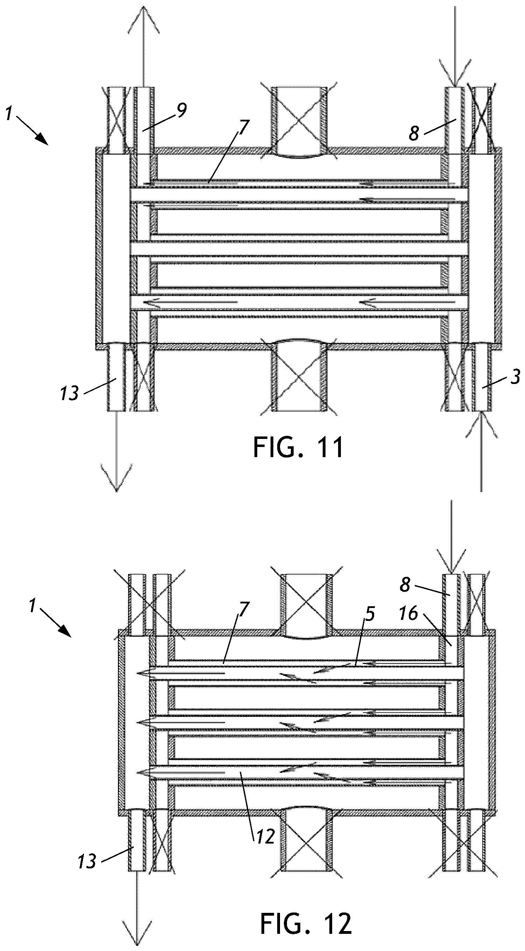

Die Fig. 12 bis 15 zeigen beispielhaft schematische Ansichten vertikaler Spülvorgänge wenigstens eines Zwischenraumes 7 und gleichzeitig einer, insbesondere an den wenigstens einen Zwischenraum 7 angrenzenden, ersten Membran 5 wenigstens einer Doppelmembrananordnung 2. Hierbei wird insbesondere das Spülfluid durch einen dritten Anschluss 8 in insbesondere einen Spülraum 16 und anschließend in den wenigstens einen Zwischenraum 7 der Doppelmembrananordnung 2 eingeleitet, wobei das Spülfluid durch die erste Membran 5 in den Innenraum 12 der ersten Membran 5 durchtritt und dabei Retentat von der ersten Membran 5 entfernt und das Gemisch aus Retentat und Spülfluid durch den Innenraum 12 zu dem fünften Anschluss 13 strömt und mittels des fünften Anschlusses 13 aus der Filtervorrichtung 1 entfernt wird. Hierbei kann insbesondere Retentat von einer dem Zwischenraum 7 zugewandten Seite der zweiten Membran 6 und Retentat von einer dem Zwischenraum 7 abgewandten Seite der ersten Membran 5 entfernt werden.

Vorteilhaft ist bei, insbesondere unterschiedlichen, tangentialen und darauf folgenden vertikalen Spülvorgängen, dass Retentat an, beispielsweise der ersten Membran 5, welches durch einen tangentialen Spülvorgang durch den Innenraum 12 der ersten Membran 5 nicht oder nicht vollständig entfernt werden konnte, insbesondere mit einem darauf folgenden vertikalen Spülvorgang, bei dem Spülfluid von einer, der Durchflussrichtung entgegengesetzten Richtung auf die Retentatschicht bzw. den Filterkuchen drückt, diesen ablösen kann.

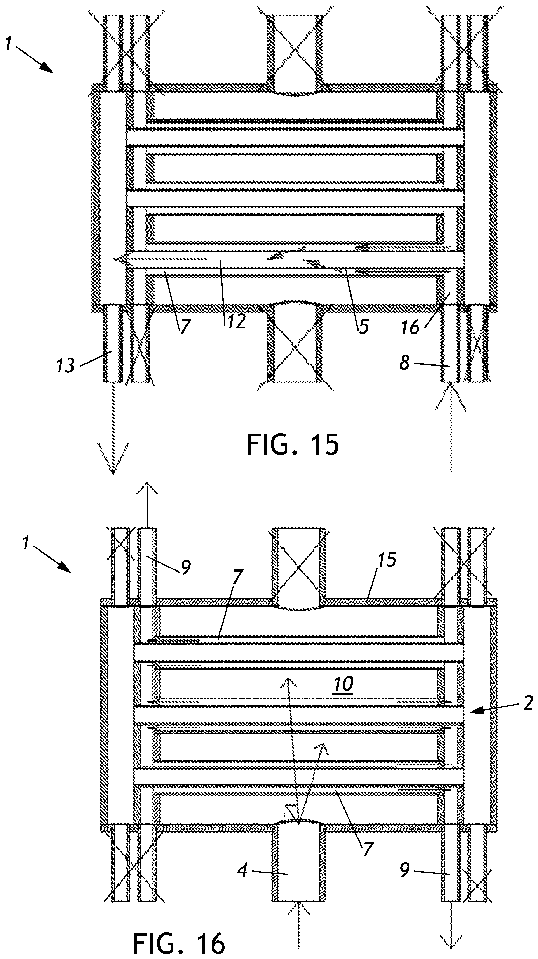

In den Fig. 16 bis 18 sind Spülvorgänge über ein zwischen mehreren Doppelmembrananordnungen 2 angeordnetes Adsorptionsmittel beispielhaft dargestellt.

Fig. 16 zeigt beispielhaft, wie Spülfluid durch einen zweiten Anschluss 4 in das Gehäuse 15 der Filtervorrichtung 1 geleitet wird, das Spülfluid in dem Gehäuse 15 um die wenigstens eine Doppelmembrananordnung 2 angeordnetes Adsorptionsmittel, welches den Adsorptionsfilter 10 ausbildet, durchspült und durch die zweite Membran 6, entgegen der Durchflussrichtung des zu filtrierenden Fluids, in einen Zwischenraum 7 wenigstens einer Doppelmembrananordnung 2 eindringt. Hierbei kann das Spülfluid einerseits Rückstände aus dem Adsorptionsmittel und andererseits das weitere Retentat, welches an einer dem Zwischenraum 7 zugewandten Seite der zweiten Membran 6 zurückgehalten wird, von der zweiten Membran 6 entfernen und durch den Spülkanal des Zwischenraumes 7 geleitet und nachfolgend durch wenigstens einen vierten

Anschluss 9 aus der Filtervorrichtung 1 abgeleitet werden. Das mit dem weiteren Retentat kontaminierte Spülfluid kann beispielsweise aus zwei schräg gegenüberliegenden vierten Anschlüssen 9 gleichzeitig aus der Filtervorrichtung 1 abgeleitet werden. Der zweite Anschluss 4 kann hierbei einen Polizeifilter 11 aufweisen.

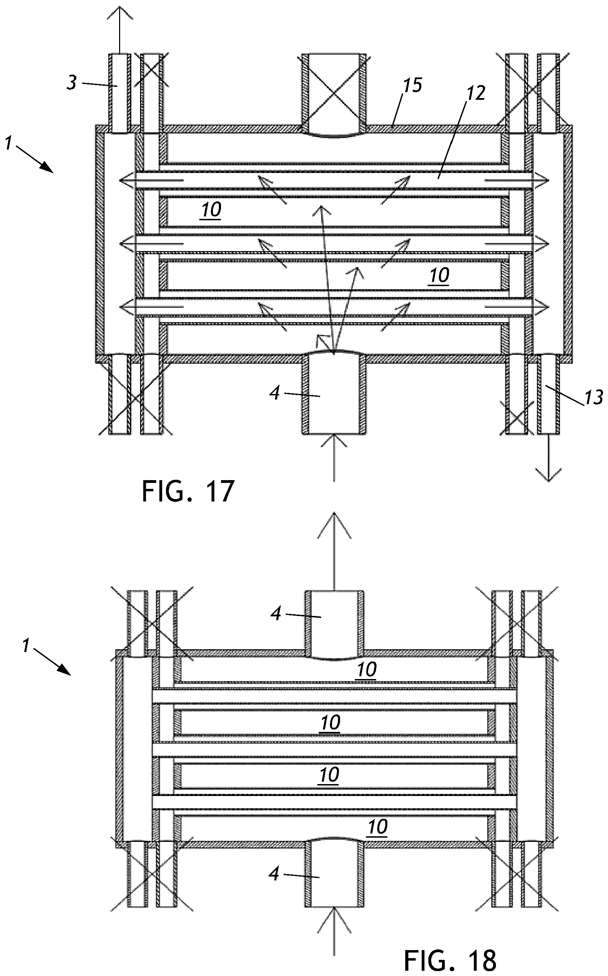

Fig. 17 zeigt beispielhaft wie Spülfluid durch einen zweiten Anschluss 4 in das Gehäuse 15 der Filtervorrichtung 1 geleitet wird, das Spülfluid in dem Gehäuse 15 um die wenigstens eine Doppelmembrananordnung 2 angeordnetes Adsorptionsmittel, welches den Adsorptionsfilter 10 ausbildet, durchspült und durch die zweite Membran 6, entgegen der Durchflussrichtung des zu filtrierenden Ffluids, in einen Zwischenraum 7 wenigstens einer Doppelmembrananordnung 2 und nachfolgend in den Innenraum 12 wenigstens einer ersten Membran 5 eindringt. Das, insbesondere mit Retentat kontaminierte, Spülfluid wird bevorzugt durch einen ersten Anschluss 3 und durch einen fünften Anschluss 13 aus der Filtervorrichtung 1 abgeleitet, wobei die Anschlüsse 3, 13 insbesondere schräg gegenüberliegend angeordnet sind. Hierbei können Rückstände bzw. Retentat aus dem Adsorptionsfilter 10, von der zweiten Membran 6 und von der ersten Membran 5 entfernt werden.

Fig. 18 zeigt beispielhaft einen Spülvorgang des Adsorptionsfilters 10. Hierbei wird bevorzugt Spülfluid durch einen zweiten Anschluss 4 in das Gehäuse 15 der Filtervorrichtung 1 geleitet, wobei das Spülfluid in dem Gehäuse 15 um die wenigstens eine Doppelmembrananordnung 2 angeordnetes Adsorptionsmittel, welches den Adsorptionsfilter 10 ausbildet, durchspült. Hierbei kann vorgesehen sein, dass das mit Rückständen kontaminierte Spülfluid aus einem weiteren zweiten Anschluss 4 aus der Filtervorrichtung 1 abgeleitet wird. Es kann hierbei auch vorgesehen sein, dass das Spülfluid, insbesondere kontaminiertes Adsorptionsmittel, über den weiteren zweiten Anschluss 4 aus dem Gehäuse 15 schwemmt. Beispielsweise muss stark mit Rückständen kontaminiertes Adsorptionsmittel, insbesondere Aktivkohle, gegen nicht kontaminiertes Adsorptionsmittel ausgetauscht werden, um die Funktionstüchtigkeit der Filtervorrichtung 1 sicherzustellen.

Im Rahmen der gegenständlichen Offenbarung werden Merkmale üblicherweise mit einem unbestimmten Artikel "ein, eine, eines, einer" eingeführt. Sofern es sich aus dem Kontext nicht anders ergibt, ist dieser unbestimmte Artikel nicht als Zahlenangabe zu verstehen, sodass die Offenbarung nicht auf lediglich ein Vorkommen des jeweiligen Merkmals beschränkt ist.

Weiters ist ein "oder" als inklusiv und nicht als exklusiv zu interpretieren. Bei zwei generischen Begriffen "A" bzw. "B" schließt daher "A oder B" die Möglichkeit "A und B" nicht aus, es sei denn, es ergibt sich aus dem Kontext oder der gegenständlichen Beschreibung, dass lediglich einer der beiden generischen Begriffe "A" und "B" vorgesehen ist.

## Patentansprüche

1. Filtervorrichtung (1) zur Filtration eines zu filtrierenden Fluids mit wenigstens einer Doppelmembrananordnung (2), wobei die Filtervorrichtung (1) wenigstens einen ersten Anschluss (3) zum Einleiten des zu filtrierenden Fluids in die wenigstens eine Doppelmembrananordnung (2) und wenigstens einen zweiten Anschluss (4) zum Ableiten eines Filtrats des zu filtrierenden Fluids aus der Filtervorrichtung (1) aufweist, wobei die wenigstens eine Doppelmembrananordnung (2) - in Durchflussrichtung des zu filtrierenden Fluids gesehen - eine erste Membran (5) und nachfolgend eine zweite Membran (6) aufweist, wobei zwischen der ersten Membran (5) und der zweiten Membran (6) ein Zwischenraum (7) ausgebildet ist, wobei der Zwischenraum (7) einen Spülkanal zum Spülen des Zwischenraumes (7) umfasst, wobei sich der Spülkanal von wenigstens einem dritten Anschluss (8) zum Einleiten eines Spülfluids in den Zwischenraum (7) zu wenigstens einem vierten Anschluss (9) zum Ableiten des Spülfluids aus dem Zwischenraum (7) erstreckt, wobei der wenigstens eine dritte Anschluss (8) und der wenigstens eine vierte Anschluss (9) in den Zwischenraum (7) münden, **dadurch gekennzeichnet, dass** zwischen der zweiten Membran (6) und dem wenigstens einen zweiten Anschluss (4) wenigstens ein Adsorptionsfilter (10) angeordnet ist.

2. Filtervorrichtung (1) nach Anspruch 1, **dadurch gekennzeichnet, dass** der Adsorptionsfilter (10) Aktivkohle und/oder Zeolithe umfasst.

3. Filtervorrichtung (1) nach Anspruch 1 oder 2, **dadurch gekennzeichnet, dass** der wenigstens eine zweite Anschluss (4) einen Polizeifilter (11) aufweist.

4. Filtervorrichtung (1) nach einem der Ansprüche 1 bis 3, **dadurch gekennzeichnet, dass** eine Porengröße der ersten Membran (5) größer als eine Porengröße der zweiten Membran (6) ist.

5. Filtervorrichtung (1) nach einem der Ansprüche 1 bis 4, **dadurch gekennzeichnet, dass** die erste Membran (5) und die zweite Membran (6) röhrenförmig ausgebildet sind, wobei die erste Membran (5) im Wesentlichen innerhalb des von der zweiten Membran (6) aufgespannten Raumes angeordnet ist.

6. Filtervorrichtung (1) nach einem der Ansprüche 1 bis 5, **dadurch gekennzeichnet, dass** die erste Membran (5) koaxial zu der zweiten Membran (6) angeordnet ist.

7. Filtervorrichtung (1) nach einem der Ansprüche 1 bis 6, **dadurch gekennzeichnet, dass** eine Breite des Zwischenraumes (7) wenigstens 0,5 mm, bevorzugt wenigstens 1, 5 mm, insbesondere wenigstens 3 mm, beträgt.

8. Filtervorrichtung (1) nach einem der Ansprüche 1 bis 7, **dadurch gekennzeichnet, dass** eine Breite des Zwischenraumes (7) maximal 6 mm, insbesondere maximal 5 mm, bevorzugt maximal 4 mm, beträgt.

9. Filtervorrichtung (1) nach einem der Ansprüche 1 bis 8, **dadurch gekennzeichnet, dass** die Filtervorrichtung (1) einen Einströmraum (14) aufweist, wobei der wenigstens eine erste Anschluss (3) in den Einströmraum (14) mündet, wobei sich die erste Membran (5) von dem Einströmraum (14) weg erstreckt.

10. Filtervorrichtung (1) nach einem der Ansprüche 1 bis 9, **dadurch gekennzeichnet, dass** angrenzend zu dem Einströmraum (14) ein Spülraum (16) angeordnet ist, wobei die erste Membran (5) den Spülraum (16) durchdringt und der Zwischenraum (7) in den Spülraum (16) mündet.

11. Verfahren zum Betreiben einer Filtervorrichtung (1),
wobei in einem Filtriervorgang
- ein zu filtrierendes Fluid durch wenigstens einen ersten Anschluss (3) durch wenigstens eine Doppelmembrananordnung (2) der Filtervorrichtung (1) geleitet wird,
- wobei das zu filtrierende Fluid anschließend zuerst durch eine erste Membran (5) und nachfolgend durch eine zweite Membran (6) der wenigstens einen Doppelmembrananordnung (2) geleitet wird, wobei zwischen der ersten Membran (5) und der zweiten Membran (6) ein Zwischenraum (7) ausgebildet ist,
- wobei nachfolgend ein Filtrat des zu filtrierenden Fluids aus der Filtervorrichtung (1) über wenigstens einen zweiten Anschluss (4) abgeleitet wird, wobei zwischen der zweiten Membran (6) und dem wenigstens einen zweiten Anschluss (4) wenigstens ein Adsorptionsfilter (10) angeordnet ist,
wobei in einem Spülvorgang
- ein Spülfluid durch wenigstens einen dritten Anschluss (8) in einen von dem Zwischenraum (7) umfassten Spülkanal eingeleitet wird,
- wobei sich der Spülkanal von dem wenigstens einen dritten Anschluss (8) zu wenigstens einem vierten Anschluss (9) erstreckt,
- wobei das Spülfluid durch den Spülkanal zu dem wenigstens einen vierten (9) Anschluss geleitet wird und der Zwischenraum (7) gespült wird,
- und das Spülfluid mittels des wenigstens einen vierten Anschlusses (9) aus dem Zwischenraum (7) abgeleitet wird.

12. Verfahren nach Anspruch 11, **dadurch gekennzeichnet, dass** der Spülvorgang in einer Unterbrechung des Filtriervorganges und/oder nach dem Filtriervorgang durchgeführt wird.

13. Verfahren nach Anspruch 11 oder 12, **dadurch gekennzeichnet, dass** in einem weiteren Spülvorgang das Spülfluid zuerst durch den wenigstens einen ersten Anschluss (3) in einen Einströmraum (14) der Filtervorrichtung (1) fließt, wobei die erste Membran (5) röhrenförmig ausgebildet ist und in den Einströmraum (14) mündet, wobei das Spülfluid anschließend in einen Innenraum (12) der ersten Membran (5) fließt und den Innenraum (12) durchspült, wobei sich der Innenraum (12) von dem wenigstens einen ersten Anschluss (3) zu wenigstens einem fünften Anschluss (13) erstreckt, wobei das Spülfluid von dem wenigstens einen fünften Anschluss (13) aus der Filtervorrichtung (1) abgeleitet wird.

## Claims

1. Filter device (1) for filtering a fluid to be filtered, having at least one double-membrane arrangement (2), Filter device (1) having at least one first connection (3) for introducing the fluid to be filtered into the at least one double-membrane arrangement (2) and at least one second connection (4) for discharging a filtrate of the fluid to be filtered out of the filter device (1), the at least one double-membrane arrangement (2) - viewed in the flow direction of the fluid to be filtered - having a first membrane (5) and, downstream, a second membrane (6), an interspace (7) being embodied between the first membrane (5) and the second membrane (6), the interspace (7) comprising a flushing channel for flushing the interspace (7) the flushing channel extending from at least one third connection (8) for introducing a flushing fluid into the interspace (7) to at least one fourth connection (9) for discharging the flushing fluid from the interspace (7), the at least one third connection (8) and the at least one fourth connection (9) opening into the interspace (7), **characterized in that** that at least one adsorption filter (10) is arranged between the second membrane (6) and the at least one second connection (4).

2. Filter device (1) according to claim 1, **characterized in that** the adsorption filter (10) comprises activated carbon and/or zeolites.

3. Filter device (1) according to claim 1 or 2, **characterized in that** the at least one second connection (4) has a control filter (11).

4. Filter device (1) according to one of claims 1 to 3, **characterized in that** a pore size of the first membrane (5) is larger than a pore size of the second membrane (6).

5. Filter device (1) according to one of the claims 1 to 4, **characterized in that** the first membrane (5) and the second membrane (6) are embodied in a tubular form, the first membrane (5) being arranged essentially within the space spanned by the second membrane (6).

6. Filter device (1) according to one of the claims 1 to 5, **characterized in that** the first membrane (5) is arranged coaxially with the second membrane (6).

7. Filter device (1) according to one of the claims 1 to 6, **characterized in that** a width of the interspace (7) is at least 0.5 mm, preferably at least 1.5 mm, in particular at least 3 mm.

8. Filter device (1) according to one of the claims 1 to 7, **characterized in that** a width of the interspace (7) is at most 6 mm, in particular at most 5 mm, preferably at most 4 mm.

9. Filter device (1) according to one of the claims 1 to 8, **characterized in that** the filter device (1) has an inflow space (14), wherein the at least one first connection (3) opens into the inflow space (14), wherein the first membrane (5) extends away from the inflow space (14).

10. Filter device (1) according to one of claims 1 to 9, **characterized in that** a flushing space (16) is arranged adjacent to the inflow space (14), the first membrane (5) penetrating the flushing space (16) and the interspace (7) opening into the flushing space (16).

11. Method for operating a filter device (1),
wherein in a filtering process
- a fluid to be filtered is passed through at least one first connection (3) through at least one double-membrane arrangement (2) of the filter device (1),
- wherein the fluid to be filtered is then passed first through a first membrane (5) and then through a second membrane (6) of the at least one double-membrane arrangement (2), an interspace (7) being embodied between the first membrane (5) and the second membrane (6),
- wherein subsequently a filtrate of the fluid to be filtered is discharged from the filter device (1) via at least one second connection (4), wherein at least one adsorption filter (10) is arranged between the second membrane (6) and the at least one second connection (4),
wherein, in a flushing process,
- a flushing fluid is introduced through at least one third connection (8) into a flushing channel surrounded by the interspace (7),
- wherein the flushing channel extends from the at least one third connection (8) to at least one fourth connection (9),
- wherein the flushing fluid is conducted through the flushing channel to the at least one fourth connection (9) and the interspace (7) is flushed,
- and the flushing fluid is discharged from the interspace (7) by means of the at least one fourth connection (9).

12. Method according to claim 11, **characterized in that** the flushing process is carried out during an interruption of the filtration process and/or after the filtration process.

13. Method according to claim 11 or 12, **characterized in that** in a further flushing process, the flushing fluid first flows through the at least one first connection (3) into an inflow space (14) of the filter device (1), the first membrane (5) being embodied in a tubular manner and opening into the inflow space (14), the flushing fluid then flowing into an interior space (12) of the first membrane (5) and flushing the interior space (12), the interior space (12) extending from the at least one first connection (3) to at least one fifth connection (13), the flushing fluid being diverted out of the Filter device (1) from the at least one fifth connection (13).

## Revendications

1. Dispositif de filtration (1) pour filtrer un fluide à filtrer, comprenant au moins un système à double membrane (2), le dispositif de filtration (1) présentant au moins un premier raccord (3) pour l'introduction du fluide à filtrer dans le ou les dispositifs à double membrane (2) et au moins un deuxième raccord (4) pour l'évacuation d'un filtrat du fluide à filtrer hors du dispositif de filtration (1), le dispositif à double membrane (2) au nombre d'un au moins comprenant - vu dans le sens d'écoulement du fluide à filtrer - une première membrane (5) suivie d'une deuxième membrane (6), un espace intermédiaire (7) étant formé entre la première membrane (5) et la deuxième membrane (6), l'espace intermédiaire (7) comprenant un canal de rinçage pour rincer l'espace intermédiaire (7), le canal de rinçage s'étendant d'au moins un troisième raccord (8) pour l'introduction d'un fluide de rinçage dans l'espace intermédiaire (7) à au moins un quatrième raccord (9) pour l'évacuation du fluide de rinçage de l'espace intermédiaire (7), le au moins un troisième raccord (8) et le au moins un quatrième raccord (9) débouchant dans l'espace intermédiaire (7), caractérisé en qu'au moins un filtre d'adsorption (10) est disposé entre la deuxième membrane (6) et le deuxième raccord (4) au moins.

2. Dispositif de filtration (1) selon la revendication 1, **caractérisé en ce que** le filtre d'adsorption (10) comprend du charbon actif et/ou des zéolithes.

3. Dispositif de filtration (1) selon la revendication 1 ou 2, **caractérisé en ce que** le deuxième raccord (4) au moins présente un filtre de sécurité (11).

4. Dispositif de filtration (1) selon l'une des revendications 1 à 3, **caractérisé en ce que** la taille des pores de la première membrane (5) est supérieure à la taille des pores de la deuxième membrane (6).

5. Dispositif de filtration (1) selon l'une des revendications 1 à 4, **caractérisé en ce que** la première membrane (5) et la deuxième membrane (6) sont de forme tubulaire, la première membrane (5) étant disposée essentiellement à l'intérieur de l'espace délimité par la deuxième membrane (6).

6. Dispositif de filtration (1) selon l'une des revendications 1 à 5, **caractérisé en ce que** la première membrane (5) est disposée de manière coaxiale par rapport à la deuxième membrane (6).

7. Dispositif de filtration (1) selon l'une des revendications 1 à 6, **caractérisé en ce que** la largeur de l'espace intermédiaire (7) est d'au moins 0,5 mm, de préférence d'au moins 1,5 mm, en particulier d'au moins 3 mm.

8. Dispositif de filtration (1) selon l'une des revendications 1 à 7, **caractérisé en ce que** la largeur de l'espace intermédiaire (7) est de 6 mm au maximum, en particulier de 5 mm au maximum, de préférence de 4 mm au maximum.

9. Dispositif de filtration (1) selon l'une des revendications 1 à 8, **caractérisé en ce que** le dispositif de filtration (1) présente une chambre d'admission (14), le premier raccord (3) au moins débouchant dans la chambre d'admission (14), la première membrane (5) s'étendant à partir de la chambre d'admission (14).

10. Dispositif de filtration (1) selon l'une des revendications 1 à 9, **caractérisé en ce qu'**une chambre de rinçage (16) est disposée à côté de la chambre d'admission (14), la première membrane (5) traversant la chambre de rinçage (16) et l'espace intermédiaire (7) débouchant dans la chambre de rinçage (16).

11. Procédé pour faire fonctionner un dispositif de filtration (1),
dans lequel, lors d'un processus de filtration
- un fluide à filtrer est conduit à travers au moins un premier raccord (3) à travers au moins un dispositif à double membrane (2) du dispositif de filtration (1),
- le fluide à filtrer est ensuite d'abord conduit à travers une première membrane (5) puis à travers une deuxième membrane (6) de l'au moins un dispositif à double membrane (2), un espace intermédiaire (7) étant formé entre la première membrane (5) et la deuxième membrane (6),
- un filtrat du fluide à filtrer est ensuite évacué du dispositif de filtration (1) par au moins un deuxième raccord (4), au moins un filtre d'adsorption (10) étant disposé entre la deuxième membrane (6) et le deuxième raccord (4) au moins,
dans lequel, lors d'un processus de rinçage
- un fluide de rinçage est introduit par au moins un troisième raccord (8) dans un canal de rinçage entouré par l'espace intermédiaire (7),
- le canal de rinçage s'étendant depuis le troisième raccord (8) au moins jusqu'à un quatrième raccord (9) au moins,
- le fluide de rinçage étant acheminé à travers le canal de rinçage jusqu'au quatrième raccord (9) au moins et l'espace intermédiaire (7) étant rincé,
- et le fluide de rinçage étant évacué de l'espace intermédiaire (7) par le quatrième raccord (9) au moins.

12. Procédé selon la revendication 11, **caractérisé en ce que** le processus de rinçage est effectué pendant une interruption du processus de filtration et/ou après le processus de filtration.

13. Procédé selon la revendication 11 ou 12, **caractérisé en ce que**, lors d'une autre opération de rinçage, le fluide de rinçage s'écoule d'abord à travers le premier raccord (3) au moins dans une chambre d'admission (14) du dispositif de filtration (1), la première membrane (5) étant tubulaire et débouchant dans la chambre d'admission (14), le fluide de rinçage s'écoulant ensuite dans un espace intérieur (12) de la première membrane (5) et rinçant l'espace intérieur (12), l'espace intérieur (12) s'étendant depuis le premier raccord (3) au moins jusqu'à un cinquième raccord (13) au moins, le fluide de rinçage étant évacué du dispositif de filtration (1) par le cinquième raccord (13) au moins.
